# EUROPÄISCHE PATENTSCHRIFT

(11) **EP 1 044 352 B1**
(45) Veröffentlichungstag und Bekanntmachung des Hinweises auf die Patenterteilung: **18.08.2004**
(21) Anmeldenummer: 98966658.1
(22) Anmeldetag: 21.12.1998
(51) Int. Cl.: G01C 19/42, G01C 19/56

(54) **DREHRATENMESSEINRICHTUNG FÜR ROTIERENDE FLUGKÖRPER**
ROTATIONAL SPEED MEASUREMENT DEVICE FOR ROTATING MISSILES
DISPOSITIF DE MESURE DE LA VITESSE DE ROTATION POUR ENGIN VOLANT ENTRAINE EN ROTATION

(30) Priorität: 30.12.1997 DE 19758223
(43) Veröffentlichungstag der Anmeldung: 18.10.2000
(73) Patentinhaber: LITEF GmbH, 79115 Freiburg (DE)
(72) Erfinder: HANDRICH, Eberhard, D-79199 Kirchzarten (DE); HOG, Hermann, D-79227 Schallstadt (DE)
(74) Vertreter: Müller, Frithjof E., Dipl.-Ing.
(86) Internationale Anmeldenummer: PCT/EP1998/008393
(87) Internationale Veröffentlichungsnummer: WO 1999/035466

(56) Entgegenhaltungen:
- WO-A-96/38710
- US-A- 5 067 084

## Beschreibung

Die Erfindung betrifft eine Drehratenmeßeinrichtung zur Kurslagestabilisierung von rotierenden Flugkörpern.

Eine prinzipielle Anforderung an eine Fluglagestabilisierungseinrichtung hinsichtlich der Einhaltung bestimmter Roll-, Pitch- und Azimuthwinkel in bezug auf eine Startposition besteht bei rotierenden Flugkörpern darin, hohe Rolldrehraten von typisch 5.000 bis 10.000 °/s messen und verarbeiten zu können.

Aus US-A-5,067,084 ist eine Drehratenmeßeinrichtung für rotierende Flugkörper bekannt, in welcher ein Drehratensensor auf einer drehbaren Plattform angebracht ist, die um eine Achse angetrieben werden kann, derart, daß die Rotation des Flugkörpers kompensiert wird.

Für die Lösung des genannten grundsätzlichen Problems bieten sich dabei eine Reihe von Möglichkeiten an, die zum Teil in der genannten US-Patentschrift angesprochen sind und nachfolgend kurz vorgestellt werden sollen:
(a) Drallstabilisierte zweiachsige integrierende Kreiselsysteme, sog. Kaltgas- oder Pulverkreiselanordnungen;
(b) optische Kreiselsysteme mit hoher Drehratenkapazität und hoher Skalenfaktorstabilität, wie Ringlaserkreisel oder faseroptische Kreisel;
(c) Vibrationsgyroskope nach dem Coriolisprinzip mit in einer Ebene schwingenden symmetrischen Schwingerstrukturen mit möglichst geringer Dämpfung und hoher Skalenfaktorgenauigkeit.

Mit den beiden ersten Lösungsvorschlägen (a) bzw. (b) lassen sich die technischen Anforderungen erfüllen, jedoch sind die Stückkosten sehr hoch. Bei der herkömmlichen mechanischen integrierenden ersten Lösung gemäß Vorschlag (a) müssen die Kreiselsysteme aus mechanischen Teilen aufgebaut werden, was von vornherein auch bei größeren Stückzahlen keine wirtschaftlichen Vorteile erwarten läßt. Weiterhin hat der Lösungsvorschlag (a) den erheblichen Nachteil, daß Funktionstests vor dem Start des Flugkörpers nur eingeschränkt möglich sind. Tests lassen sich in der Praxis nur vereinzelt durchführen, weil der Gas- oder Pulverspeicher anschließend erneuert oder ausgetauscht werden muß, was nur mit erheblichem Aufwand möglich ist.

Optische Kreiselsysteme gemäß dem Vorschlag (b) können hinsichtlich ihres Bias auch nach langer Lagerzeit leicht überprüft werden. Zur Messung der hohen Drehraten wird eine hohe Skalenfaktorgenauigkeit erforderlich, die sich nur schwer überprüfen läßt. Teuere Tests auf Drehtischen nach längerer Lagerzeit des Flugkörpers sind inakzeptabel. Es gibt zwar Vorschläge, bei Ringlasern oder faseroptischen Kreiseln den Skalenfaktor hinsichtlich einer geforderten Genauigkeit von beispielsweise 0,02 % auch während einer Lagerzeit von bis zu 20 Jahren systemintern zu überwachen. Dann jedoch werden die Stückzahlkosten für optische Kreiselsysteme inakzeptabel hoch, auch wenn berücksichtigt wird, daß optische Bauteile und Baugruppen aufgrund neuerer Herstellungsverfahren immer kostengünstiger werden.

Vibrationsgyroskope gemäß Vorschlag (c) erscheinen auf den ersten Blick eine vielversprechende Möglichkeit zur Lösung des aufgezeigten Problems zu bieten, weil eine induzierte Vibration in einem idealen Resonator mit hohem Q-Faktor ihre inertiale Orientierung auch bei hohen Rollraten beibehält, so daß sich rein theoretisch ein ideales Drehraten-integrierendes Gyroskopsystem verwirklichen ließe. Tatsächlich jedoch lassen sich bekannte Resonatoren nicht mit diesen idealen Eigenschaften herstellen, was beispielsweise für Stimmgabelschwinger oder ring- bzw. kreisförmige Schwingersysteme mit einer Mehrzahl von Schwingungsmoden und Eigenfrequenzen gilt, die aufeinander angepaßt werden müssen. So halten beispielsweise ringförmige Schwingerkonfigurationen aufgrund des Bryan-Faktors nicht ihre inertiale Orientierung. Theoretisch ergibt sich ein Ausgangs-Schwingungswinkel von etwa 60 % zum Eingangswinkel. Die Abweichungen von 60 % sind jedoch abhängig von den tatsächlichen Eigenmoden und der jeweiligen mechanischen Verkopplung. Falls sie sich während der Lagerung durch Vibration oder Schocks von außen verändern, so verändert sich auch der Skalenfaktor, so daß die Anforderung von 0,02 % Genauigkeit über einen vergleichsweise langen Lagerzeitraum nicht zu erfüllen ist.

Bei Doppel-Stimmgabelschwingern dagegen liegt der Bryan-Faktor bei nahezu 100 %, wobei Abweichungen von etwa 1,3 % berücksichtigt werden müssen, so daß sich die geforderte Skalenfaktorstabilität von 0.02 % nach einer Lagerung von bis zu 20 Jahren kaum erreichen läßt. Außerdem stößt die Überprüfung auf große praktische Schwierigkeiten.

Ein weiteres Hauptproblem für beide Konzepte von Vibrationsgyroskopen ergibt sich aus den unvermeidlichen Dämpfungen. In der Praxis müssen, um die Funktion als Drehraten-integrierende Gyroskope sicherzustellen, die Dämpfungen zumindest bei den beiden benutzten Moden elektronisch beseitigt werden, wobei für den anfänglichen Vibrationsmodus konstante Erregung zu fordern ist, während für den anderen Schwingungsmodus Dämpfungen zu beseitigen sind, beispielsweise mittels elektronischer Torquer, ohne diesen Schwingungsmodus ohne Corioliskräfte zu erzwingen. Falls die Dämpfungen nicht korrekt beseitigt werden, zeigen sich bei integrierenden Gyroskopen erhebliche Fehler bis zur Instabilität der beiden Schwingungsmoden.

Um die temperaturabhängige Gasdämpfung auszugleichen, müssten insbesondere für die anzustrebende miniaturisierte Dimensionierung Vibrationsgyroskope im Vakuum betrieben werden. Es ist jedoch schwierig und teuer, ein stabiles Vakuum in kleinen Volumina über lange Lagerzeiten von bis zu 20 Jahren stabil aufrechtzuerhalten.

Der Erfindung liegt damit die Aufgabe zugrunde, eine Drehratenmesseinrichtung für die Kurs-Lagestabilisierung von rotierenden Flugkörpern zu schaffen, die sich durch eine hohe Bias- und Skalenfaktorstabilität auch nach sehr langer Lagerzeit des Flugkörpers, durch gute Testbarkeit und vergleichsweise niedrige Stückkosten auszeichnet.

Die Erfindung ist bei einer Drehratenmesseinrichtung für die Kurs-Lagestabilisierung von rotierenden Flugkörpern erfindungsgemäß gekennzeichnet durch drei hinsichtlich von drei Raumachsen orthogonal zueinander ausgerichteten mikromechanischen Drehratensensoren, gemeinsam montiert auf einer einachsig über einen Servokreis rotierbaren und in den zu stabilisierenden Flugkörper einzubauenden Plattform zur Rotationsentkopplung der Drehratensensoren.

Vorzugsweise sind hinsichtlich dreier Raumachsen orthogonal zueinander ausgerichtete mikromechanische Drehratensensoren vorgesehen, die gemeinsam auf derselben rotierbaren Plattform angeordnet sind. Als mikromechanische Drehratensensoren für den vorgesehenen Anwendungszweck kommen offene bzw. rückgestellte Systeme in Frage, wie sie beispielsweise in der veröffentlichten internationalen Patentanmeldung WO 96/38710 beschrieben sind, also auf dem Coriolisprinzip basierende, mindestens zweilagige, kapazitiv anreg- und auslesbare Schwingerstrukturen, vorzugsweise mit ebenfalls kapazitiv wirkender Rückstellbarkeit.

Die erfindungsgemäße Kombination aus mikromechanischen Drehratensensoren mit elektromechanischer Rotationsentkopplung bietet folgende funktionsmäßige und wirtschaftliche Vorteile:
- Es lassen sich drei identische Gyroskope auf einer einachsigen Plattform problemlos unterbringen;
- aufgrund des Lösungsprinzips reduzieren sich die Anforderungen für die Bias-Stabilität auf ca. 0.33 °/s, die für diese Anwendung in der Regel ausreichen:

- die Anforderungen hinsichtlich des Skalenfaktors vermindern sich aufgrund des Ausgleichs durch die rotierende Plattform von 0,02 % auf 1 %;
- im Vergleich zu dem Lösungsansatz (a) mit zwei jeweils dreiachsigen mechanischen Kreiselsystemen wird bei der erfindungsgemäßen Lösung lediglich eine einfache einachsige mechanische Plattform benötigt:

- alle Funktionen lassen sich während oder am Ende einer Lagerzeit vollständig austesten, so daß das Funktionsausfallrisiko minimiert ist.

Ein Ausführungsbeispiel der Erfindung wird nachfolgend unter Bezug auf die Zeichnung näher erläutert. Es zeigen:
- **Fig. 1**: Die Explosionsschnittdarstellung einer Drehratenmeßeinrichtung gemäß der Erfindung;
- **Fig. 2**: ein Blockdiagramm der Gesamtelektronik:
- **Fig. 3**: die perspektivische Prinzipdarstellung eines mikromechanischen Drehratensensors einschließlich zugeordneter Antriebs-, Auslese- und Rückstellelektronik.

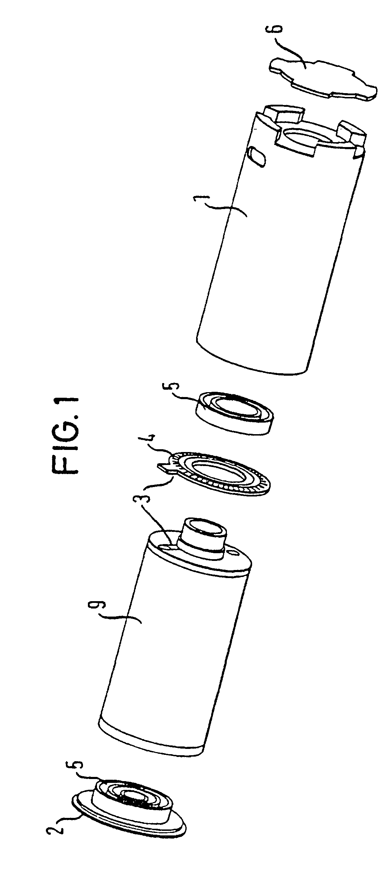

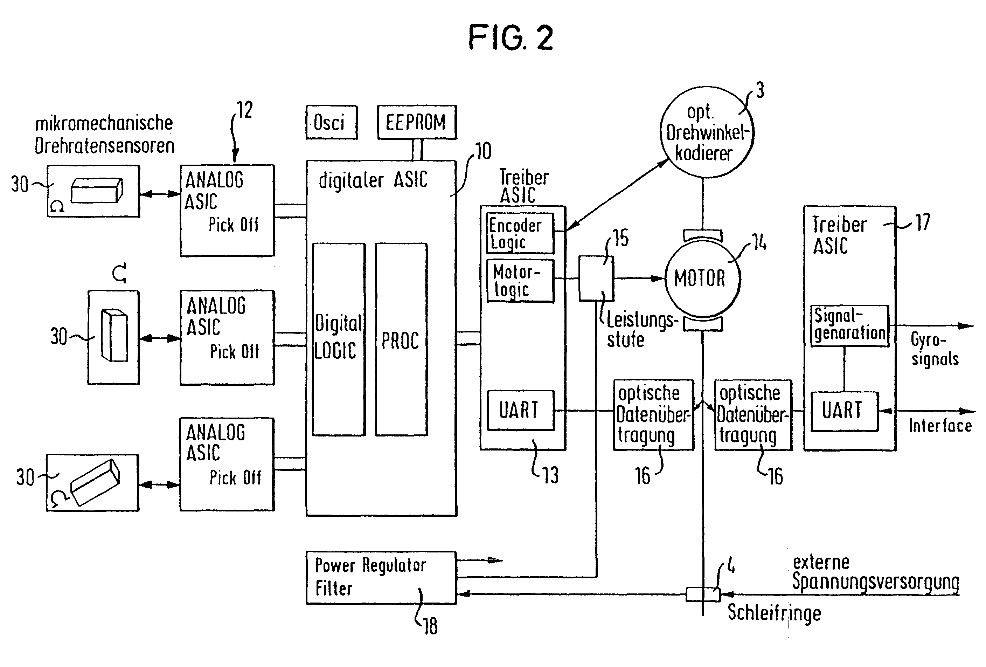

Fig. 1 läßt ein topfartiges Gehäuse 1 mit Deckel 2 erkennen, in dem ein als trommelartiger Hohlkörper ausgebildeter Rotor 9 (Plattform) mittels abstützender Kugellager 5 rotierbar gelagert ist. In einem Innenraum von Rotor 9 sind drei mikromechanische Drehratensensoren (in Fig. 1 nicht dargestellt) angeordnet, die hinsichtlich ihrer Meßachsen auf jeweils eine Raumrichtung ausgerichtet fixiert sind. Verbunden mit dem Gehäuse 1 ist eine als Schnittstellen-Board bezeichnete Leiterplatte 6 vorhanden, auf der sich die weiter unten anhand der Fig. 2 erläuterte Elektronik für die äußere Schnittstelle befindet, während sich auf einer zweiten Leiterplatte im Inneren des Rotors 9 (nicht dargestellt) - als Prozessor-Board bezeichnet - die elektronischen Baugruppen für die Antriebs-, Rückstell-, Verstärker- und Prozessorelektronik der drei mikromechanischen Drehratensensoren sowie für den Winkelabgriff und den Antrieb des Rotors (Plattform) 9 befinden. Ein Drehwinkelkodierer einschließlich optischer Auslesung der Drehwinkel des Rotors 9 ist mit Bezugshinweis 3 gekennzeichnet, während Schleifringe 4 für die Spannungs-übertragung dienen. Die Datenübertragung erfolgt vorzugsweise optisch (hier nicht dargestellt). Der Motor für den Antrieb des Rotors 9 ist in Fig. 1 ebenfalls nicht dargstellt.

Die Fig. 2 veranschaulicht die Gesamtelektronik für drei mikromechanische Kreisel auf der stabilisierten einachsigen Plattform 9. Zentraler Block der Elektronik ist ein Prozesor 10, realisiert als digitaler ASIC, der sowohl die Regelschleifen der mikromechanischen Drehratensensoren 30 mit ihrer zugeordneten Elektronik 12 als auch einen Treiber ASIC 13 bedient. Der Treiber ASIC 13 liest den optischen Drehwinkelkodierer 3 aus und steuert die Rotordrehung über einen Motor 14 und eine Leistungsstufe 15, so daß die Rotordrehung die Flugkörperdrehung kompensiert. Über eine optische Datenübertragung 16 werden alle Daten über einen weiteren Treiber ASIC 17 weitergeleitet. Die externe Spannungsversorgung wird über die Schleifringe 4 zugeführt und intern in Block 18 aufbereitet.

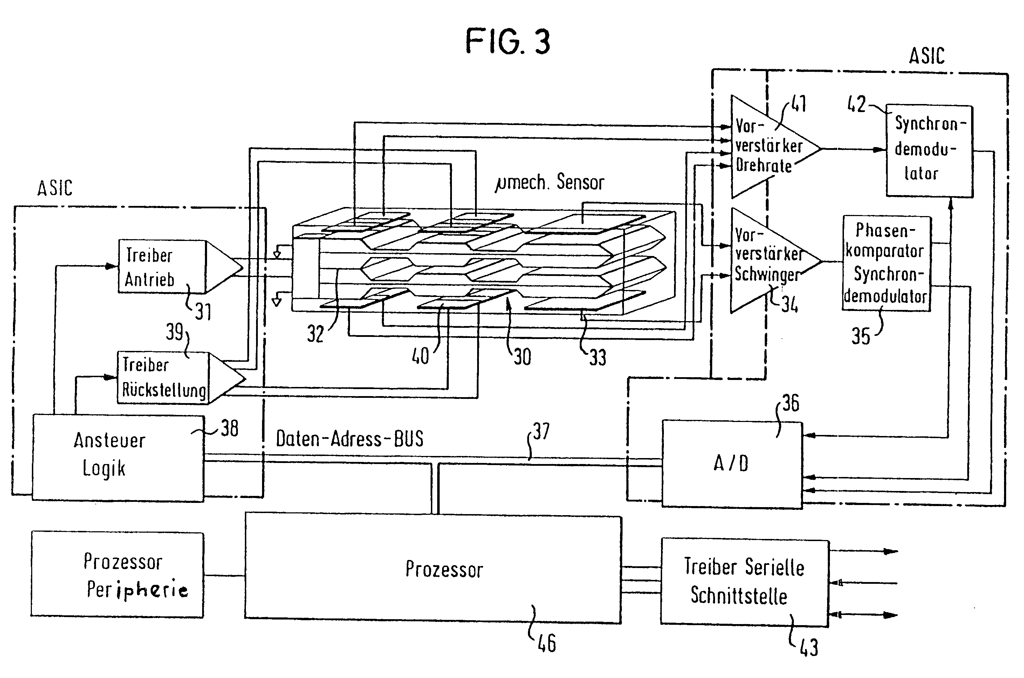

Die Fig. 3 veranschaulicht den prinzipiellen Aufbau eines im Rahmen der Erfindung verwendbaren mikromechanischen Drehratensensors, basierend auf dem Coriolisprinzip mit zugeordneter Antriebs-, Auslese- und Rückstellelektronik. Wie in der Figur erkennbar, besteht der mikromechanische Drehratensensor 30 im Prinzip aus zwei plattenförmigen in Gegenphase anzuregenden Schwingern, die in zwei Ebenen schichtartig übereinander angeordnet und senkrecht zu ihren jeweiligen Plattenebenen zu Schwingungen kapazitiv anregbar sind, wobei der Antrieb 31 im Bereich eines sehr engen Antriebsspalts 32 erfolgt. was zu vergleichsweise großen Schwingungsamplituden führt, die am rechten vorzugsweise freien Ende der beiden Schwinger bei 33 ausgelesen werden und über einen Vorverstärker 34 auf einen Phasenkomparator und Synchrondemodulator 35 gelangen, dessen Ausgangssignal über einen A/D-Wandler 36 auf einen Datenbus 37 gelangt, an den einerseits ein Prozessor 36 und andererseits eine Ansteuerelektronik 38 angeschlossen sind. wobei letzere die Treiberpulse für den Antrieb 31 und die Rückstellpulse für einen Rückstelltreiber 39 bereitstellt, der eine Drehratenrückstellung auf kapazitivem Wege im mittleren Bereich 40 des mikromechanischen Drehratensensors 30 bewirkt. Die kapazitive Drehratenauslesung zur Steuerung der Rückstellimpulse erfolgt über ober- bzw. unterseitige Plattenpaare im Antriebsbereich, also auf der linken Seite des Drehratensensors 30. Die Auslesesignale gelangen über einen Vorverstärker 41 auf einen weiteren Synchrondemodulator 42, der mit dem gleichen Synchronisierungstakt wie der Synchrondemodulator 35 gespeist ist. und dessen Ausgangssignal ebenfalls auf die A/D-Wandlergruppe 36 und von dort über den Bus 37 auf den Prozessor 36 gelangt. Wie dargestellt, können einzelne elektronische Baugruppen sowie die Ansteuerelektronik 38 mit den beiden Treibern 31 und 39 bzw. die Baugruppen 34, 41, 42 und 35, 36 als funktionsindividualisierter ASIC, also als integrierter Schaltkreis aufgebaut sein. Die gemessene Drehrate wird über die serielle Schnittstelle 43 abgegeben.

## Patentansprüche

1. Drehratenmesseinrichtung für die Kurs-Lagestabilisierung von rotierenden Flugkörpern, **gekennzeichnet durch** drei hinsichtlich von drei Raumachsen orthogonal zueinander ausgerichteten mikromechanischen Drehratensensoren (30), gemeinsam montiert auf einer einachsig über einen Servokreis rotierbaren und in den zu stabilisierenden Flugkörper eingzubauenden Plattform (9) zur Rotationsentkopplung der Drehratensensoren.

2. Drehratenmesseinrichtung nach Anspruch 1, **dadurch gekennzeichnet, dass** die Drehratensensoren als auf dem Coriolisprinzip basierende, mindestens zweilagige, kapazitiv anreg- und auslesbare Schwingerstrukturen ausgebildet sind.

3. Drehratenmesseinrichtung nach Anspruch 2, **dadurch gekennzeichnet, dass** die Drehratensensoren als kapazitiv rückstellbare Schwingerstrukturen ausgebildet sind.

4. Drehratenmesseinrichtung nach Anspruch 1, **dadurch gekennzeichnet, dass** die Gesamtelektronik für die Drehratensensoren, den Rotorabgriff und -antrieb im Inneren eines die Plattform (9) bildenden Rotors zusammengefasst ist.

## Claims

1. Spin rate measurement device for track attitude stabilization of rotating missiles, **characterized by** three micromechanical spin rate sensors (30) whose three spatial axes are aligned at right angles to one another, jointly mounted on a platform (9) which is uniaxially rotatable via a servo loop and adapted to be built into the missile to be stabilized for rotation decoupling of the spin rate sensor.

2. Spin rate measurement device according to claim 1, **characterized in that** the spin rate sensors are designed as oscillator structures which are based on the Coriolis principle, have at least two layers, and can be excited and read capacitively.

3. Spin rate measurement device according to claim 2, **characterized in that** the spin rate sensors are designed as oscillator structures which can be reset capacitively.

4. Spin rate measurement device according to claim 1, **characterized in that** all the electronics for the spin rate sensors, the rotor pick-off and rotor drive are combined in the interior of the platform (9) forming the rotor.

## Revendications

1. Dispositif de mesure de vitesse de rotation pour la stabilisation de cap et de position d'engins volants en rotation, **caractérisé en ce qu'**il comprend trois détecteurs micromécaniques de vitesse de rotation (30) orientés orthogonalement les uns vis-à-vis des autres dans un repère spatial à trois axes et montés conjointement sur une plate-forme (9) pouvant tourner de manière uniaxiale par l'intermédiaire d'un servocircuit et adaptée pour être incorporée à l'engin volant devant être stabilisé, en vue du découplage de rotation desdits détecteurs de vitesse de rotation.

2. Dispositif de mesure de vitesse de rotation selon la revendication 1,**caractérisé en ce que** les détecteurs de vitesse de rotation ont la forme de structures d'oscillateur fondées sur le principe de Coriolis, à deux couches au moins, pouvant être excitées et sélectionnées de manière capacitive.

3. Dispositif de mesure de vitesse de rotation selon la revendication 2, **caractérisé en ce que** les détecteurs de vitesse de rotation ont la forme de structures d'oscillateurs pouvant être réinitialisées de manière capacitive.

4. Dispositif de mesure de vitesse de rotation selon la revendication 1, **caractérisé en ce que** l'ensemble de l'électronique pour les détecteurs de vitesse de rotation, la prise et la commande du rotor se trouve rassemblé à l'intérieur d'un rotor formant la plate-forme (9).
